# EUROPÄISCHE PATENTSCHRIFT

(11) **EP 3 232 174 B1**
(45) Veröffentlichungstag und Bekanntmachung des Hinweises auf die Patenterteilung: **31.10.2018**
(21) Anmeldenummer: 16164736.7
(22) Anmeldetag: 11.04.2016
(51) Int. Cl.: G01L 9/00, G01L 13/02, G01L 19/04

(54) **DRUCKSENSOR**
PRESSURE SENSOR
CAPTEUR DE PRESSION

(43) Veröffentlichungstag der Anmeldung: 18.10.2017
(73) Patentinhaber: VEGA Grieshaber KG, 77709 Wolfach (DE)
(72) Erfinder: Hengstler, Clemens, 77716 Haslach (DE)
(74) Vertreter: Westphal, Mussgnug & Partner Patentanwälte mbB

(56) Entgegenhaltungen:
- BE-A- 696 736
- DE-A1-102012 113 042
- US-A1- 2013 233 085

## Beschreibung

Die vorliegende Erfindung betrifft einen Drucksensor mit wenigstens einer Druckmesszelle, einem Druckmittler sowie wenigstens einer Messleitung zur Übertragung eines auf den Druckmittler wirkenden Drucks zu der Messzelle.

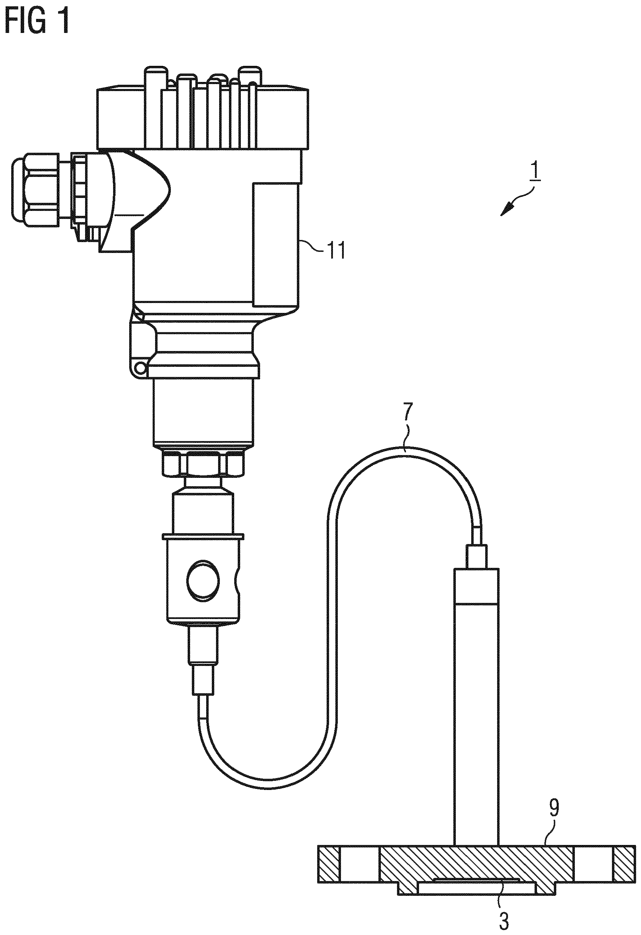

Derartige Messzellen sind aus dem Stand der Technik bekannt und werden meist bei Druckmessungen in Prozessumgebungen mit hoher Prozesstemperatur eingesetzt, da eine Elektronik des Drucksensors nicht über eine bestimmte Temperatur hinaus, beispielsweise 125°C, erhitzt werden darf. Ein beispielhafter Drucksensor 1 gemäß dem Stand der Technik ist in Figur 1 dargestellt. Der Drucksensor 1 besteht im Wesentlichen aus einem Gehäuse 11, in dem eine Messelektronik sowie eine Druckmesszelle 5 angeordnet sind. Die Druckmesszelle 5 ist über eine Messleitung, die vorliegend als Kapillare 7 ausgebildet ist, mit einem Druckmittler 3, der an einem Prozessanschluss 9 angeordnet ist, verbunden. Der Druckmittler und die Kapillare sind mit einem inkompressiblen Übertragungsmedium, meist einem Öl, zur Übertragung eines auf den Druckmittler 3 wirkenden Prozessdruckes zu der Druckmesszelle 5 gefüllt.

Mittels des Prozessanschlusses 9 kann der Druckmittler 3 in einer Prozessumgebung angeordnet werden. Meist ist dies ein Tank oder eine Rohrleitung, wobei ein Druck innerhalb des Tanks beziehungsweise der Rohrleitung als Prozessdruck gemessen werden soll.

Bei den aus dem Stand der Technik bekannten Drucksensoren der vorstehend beschriebenen Bauart wird es als nachteilig empfunden, dass zusätzliche Temperatureinwirkungen außerhalb der Prozessumgebung, beispielsweise auf die Kapillare, und/oder mechanische Einwirkungen auf die Kapillare, beispielsweise durch starkes Abknicken, das Messergebnis verfälschen können. Ferner ist es als nachteilig bekannt, dass die auf den Druckmittler einwirkende Prozesstemperatur ebenfalls Messfehler verursacht. Die Temperatur induzierten Messfehler resultieren dabei auf einer Ausdehnung des in dem Druckmittler und der Kapillare enthaltenen Übertragungsmediums, die zu einer Druckwirkung auf die Druckmesszelle führt.

Im Stand der Technik ist es bekannt, solche temperaturinduzierten Messfehler mittels Temperatursensoren im Druckmittler und/oder der Druckmesszelle zu erfassen und elektronisch zu kompensieren. Das Vorsehen zusätzlicher Temperatursensoren, idealerweise am Druckmittler und der Druckmesszelle, wird jedoch aufgrund des erhöhten Verdrahtungsaufwandes sowie der zusätzlichen Kosten für die zusätzlich notwendigen Sensoren als nachteilig empfunden.

Es ist die Aufgabe der vorliegenden Erfindung, einen Drucksensor mit wenigstens einer Druckmesszelle, einem Druckmittler sowie wenigstens einer Messleitung zur Übertragung eines auf den Druckmittler wirkenden Drucks zu der Druckmesszelle derart weiterzubilden, dass eine Kompensation temperaturinduzierter und mechanisch induzierter Messfehler kostengünstiger und exakter möglich ist.

Ein erfindungsgemäßer Drucksensor weist wenigstens eine Druckmesszelle, einen Druckmittler sowie wenigstens eine Messleitung zur Übertragung eines auf den Druckmittler wirkenden Drucks zu der Druckmesszelle auf. Außerdem weist der Drucksensor wenigstens eine Kompensationsleitung auf, die parallel zu der Messleitung angeordnet ist, wobei die Kompensationsleitung gleiche thermische und mechanische Eigenschaften wie die Messleitung aufweist, so dass eine auf die Messleitung wirkende Temperatur und/oder eine auf die Messleitung wirkende mechanische Wirkung gleichermaßen auf die Kompensationsleitung wirkt. Solche Drucksensoren sind beispielweise aus DE 10 2012 113 042 A1 oder US 2013/0233085 A1 bekannt. Der erfindungsgemäße Drucksensor zeichnet sich dadurch aus, dass die Kompensationsleitung mit einem den Druckmittler nachbildenden druckinsensitiven Element verbunden ist, das den Prozessbedingungen in gleicher Weise wie der Druckmittler ausgesetzt ist, wobei die Kompensationsleitung mit der Druckmesszelle verbunden ist, wobei die Druckmesszelle als Differenzdruckmesszelle mit zwei druckbeaufschlagbaren Seiten ausgebildet ist, die einerseits mit der Messleitung und andererseits mit der Kompensationsleitung verbunden ist, oder der Drucksensor eine erste Druckmesszelle, mit der die Messleitung verbunden ist, und an der ein Messwert abgreifbar ist, eine zweite Druckmesszelle, mit der der die Kompensationsleitung verbunden ist, und an der ein Kompensationswert abgreifbar ist, sowie eine Messelektronik, der eingangsseitig der Messwert und der Kompensationswert zugeführt sind und an der ausgangsseitig ein kompensierter Messwert abgreifbar ist, aufweist.

Der vorliegenden Erfindung liegt damit die Erkenntnis zugrunde, dass eine präzise und kostengünstige Kompensation von thermisch und mechanisch induzierten Messfehlern besonders einfach durch eine Kompensation des Messfehlers auf mechanische Art und Weise erfolgen kann, wobei damit vorzugsweise nachfolgende aufwändige elektronische Kompensationsvorrichtungen entfallen können oder zumindest deutlich günstiger ausgestaltet werden können.

Durch die erfindungsgemäß vorgesehene Kompensationsleitung, die gleiche thermische und mechanische Eigenschaften wie die Messleitung aufweist und parallel zu der Messleitung angeordnet ist, wird erreicht, dass eine auf die Messleitung wirkende Temperatur und/oder eine auf die Messleitung wirkende mechanische Wirkung gleichermaßen auf die Kompensationsleitung wirkt. Dadurch, dass die Messleitung und die Kompensationsleitung gleiche Eigenschaften aufweisen, das bedeutet insbesondere gleiche thermische und mechanische Eigenschaften aufweisen, werden durch äußere Einflüsse gleiche Wirkungen in den beiden Leitungen hervorgerufen, sodass ein Messfehler, der in der Messleitung auftritt, insbesondere eine Druckänderung, gleichermaßen in der Kompensationsleitung hervorgerufen wird. Eine Kompensation des Messfehlers kann anschließend mechanisch und/oder elektronisch erfolgen.

Die Messleitung und die Kompensationsleitung sollten ferner idealerweise mit dem gleichen Übertragungsmedium gefüllt sein, vorzugsweise den gleichen Querschnitt aufweisen, das gleiche Volumen an Übertragungsmedium enthalten und möglichst nahe beieinander angeordnet sein.
Die Messleitung und die Kompensationsleitung können dabei als sog. Kapilare, d.h. als flexible Leitung, als Rohrleitungen, als Bohrungen in einem zwischen Druckmittler und Druckmesszelle angeordneten Element oder Kombinationen hiervon ausgebildet sein.
Der Einfluss der Prozesstemperatur auf die Messergebnisse wird besonders einfach kompensiert, da die Kompensationsleitung mit einem dem Druckmittler nachbildenden druckinsensitiven Element verbunden ist, das den Prozessbedingungen in gleicher Weise wie der Druckmittler ausgesetzt ist. Durch ein entsprechendes, den Druckmittler nachbildendes druckinsensitives Element wird erreicht, dass die Prozesstemperatur in gleicher Weise auf das in der Kompensationsleitung enthaltene Übertragungsmedium einwirkt wie auf den Druckmittler, sodass in beiden Leitungen, der Kompensationsleitung und der Messleitung, die gleiche Temperatureinwirkung erzielt wird und damit in beiden Leitungen die gleiche Erwärmung und damit Ausdehnung des Übertragungsmediums erfolgt.

Eine besonders geschickte Anordnung durch Integration des Druckmittlers und des den Druckmittler nachbildenen druckinsensitiven Elementes kann erreicht werden, wenn das druckinsensitive Element und der Druckmittler gemeinsam in einen Prozessanschluss zur Anordnung des Druckmittlers in einer Prozessumgebung integriert sind.

Eine besonders platzsparende Anordnung, mit der auch eine möglichst gleichmäßige Temperatureinwirkung auf den Druckmittler und das druckinsensitive Element erreicht wird, ist gegeben, wenn das druckinsensitive Element den Druckmittler ringförmig umgebend ausgebildet ist. Eine solche Anordnung bietet sich an, da der Druckmittler in der Regel eine kreisförmig ausgebildete Membran zur Aufnahme des Drucks in der Prozessumgebung aufweist.

Um eine gleichmäßige Temperatureinwirkung auf den Druckmittler und das druckinsensitive Element zu erreichen, ist es vorteilhaft, wenn das druckinsensitive Element eine zum Prozess weisende Fläche einer Größe aufweist, die einer Größe einer zum Prozess weisenden Fläche des Druckmittels im Wesentlichen entspricht, vorzugsweise mit dieser identisch ist. In einer konkreten Ausgestaltung ist dabei die den Druckmittler umgebende Ringfläche des druckinsensitiven Elements identisch zur Membranfläche des Druckmittlers.

Temperatureinwirkungen und mechanische Einwirkungen, die auf die zwischen dem Druckmittler und der Druckmesszelle angeordnete Übertragungsleitung wirken, können besonders gut kompensiert werden, wenn die Messleitung und die Kompensationsleitung in einer gemeinsamen als mechanischer Schutz ausgebildeten Ummantelung angeordnet sind. Durch eine entsprechende gemeinsame Ummantelung werden Temperatureinflüsse gleichmäßig auf die Messleitung und die Kompensationsleitung verteilt, sodass Temperatureinwirkungen auf beide Leitungen in gleicher Weise wirken. Durch einen mechanischen Schutz werden mechanische Einwirkungen, beispielsweise zu enge Radien oder Knicke, insbesondere bei Kapilaren, ebenfalls auf beide Leitungen übertragen, sodass dadurch induzierte Messfehler ebenfalls in beiden Leitungen gleichzeitig wirken.

Die Druckmesszelle kann hierbei als herkömmliche Druckmesszelle, deren Messmembran von einer Seite, insbesondere der Vorderseite, mit dem Druck der Messleitung und von der anderen Seite, insbesondere der Rückseite, mit dem Druck der Kompensationsleitung beaufschlagt und ausgebildet sein. Dies stellt eine kostengünstigere Lösung dar.

Wenn die Druckmesszelle als Differenzdruckmesszelle die sowohl positive als auch negative Drücke erfassen kann, ausgebildet ist, erfolgt eine Kompensation des temperatur- oder mechanisch induzierten Messfehlers dann dadurch, dass die Druckmesszelle als Druckzelle mit zwei druckbeaufschlagbaren Seiten ausgebildet ist, die einerseits mit der Messleitung und andererseits mit der Kompensationsleitung verbunden ist. Der Druckmesszelle werden auf diese Weise einerseits der Messdruck sowie der Messfehler und andererseits nur der Messfehler zugeführt, was dazu führt, dass eine rein mechanische Kompensation des Messfehlers in der Druckmesszelle erfolgt.

Die vorliegende Erfindung kann damit vorteilhafterweise auch bei Drucksensoren zur Differenzdruckmessung eingesetzt werden.

Ein solcher Drucksensor zeichnet sich dadurch aus, dass der Sensor einen ersten und einen zweiten Druckmittler und zwei Kompensationsleitungen aufweist, wobei die Differenzdruckmesszelle einerseits mit der Messleitung des ersten Druckmittlers und der dem zweiten Druckmittler zugeordneten Kompensationsleitung und andererseits mit der Messleitung des zweiten Druckmittlers und der dem ersten Druckmittler zugeordneten Kompensationsleitung verbunden ist. Auf diese Weise werden temperaturinduzierte und mechanisch induzierte Messfehler von beiden Druckmittlerseiten jeweils rein mechanisch kompensiert, sodass keinerlei zusätzliche Messelektronik notwendig ist.

Alternativ zu einer Messfehlerkompensation mittels einer Differenzdruckmesszelle weist der Drucksensor auch zwei Druckmesszellen auf und es erfolgt nachfolgend eine elektronische Messfehlerkompensation. Ein entsprechender Sensor weist eine erste Druckmesszelle und eine zweite Druckmesszelle sowie eine Messelektronik auf. Die erste Druckmesszelle ist mit der Messleitung verbunden, wobei ausgangsseitig an der ersten Druckmesszelle ein Messwert abgreifbar ist. Die zweite Druckmesszelle ist mit der Kompensationsleitung verbunden, wobei ausgangsseitig an der zweiten Druckmesszelle ein Kompensationswert abgreifbar ist. Der Messwert und der Kompensationswert sind beide der Messelektronik zugeführt, wobei diese durch Differenzbildung einen kompensierten Messwert bildet, der ausgangsseitig abgreifbar ist.

Die vorliegende Erfindung wird nachfolgenden unter Bezugnahme auf Ausführungsbeispiele anhand der beigefügten Figuren eingehend erläutert. Es zeigen:
- Figur 1: einen Drucksensor gemäß dem Stand der Technik (schon behandelt),
- Figur 2: ein erstes Ausführungsbeispiel eines Drucksensors gemäß der vorliegenden Anmeldung,
- Figur 3: ein zweites Ausführungsbeispiel eines Drucksensors gemäß der vorliegenden Anmeldung und
- Figur 4: ein drittes Ausführungsbeispiel eines Drucksensors gemäß der vorliegenden Anmeldung

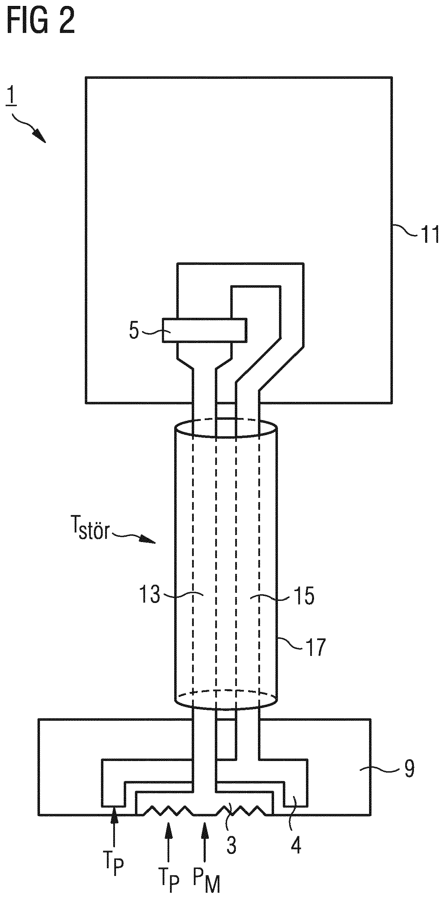

In Figur 2 ist ein erstes Ausführungsbeispiel eines Drucksensors 1 gemäß der vorliegenden Anmeldung dargestellt. Der Drucksensor 1 besteht im Wesentlichen aus einer Druckmesszelle 5, die in einem Gehäuse 11 des Drucksensors 1 angeordnet ist. Die Druckmesszelle 5 ist im vorliegenden Ausführungsbeispiel als Differenzdruckmesszelle ausgebildet und mit einem ihrer Anschlüsse über eine Messleitung 13 mit einem Druckmittler 3 verbunden. Mit ihrem zweiten Anschluss ist die Differenzdruckmesszelle 5 über eine Kompensationsleitung 15 mit einem druckinsensitiven Element 4 verbunden. Der Druckmittler 3 und das druckinsensitive Element 4 sind beide in einem Prozessanschluss 9 zur Befestigung des Druckmittlers 3 in einer Prozessumgebung angeordnet.

Alternativ kann die Druckmesszelle 5 in dem vorliegenden Aufbau auch als herkömmliche Druckmesszelle oder als Piezomesszelle ausgebildet sein.

Sowohl die Messleitung 13 als auch die Kompensationsleitung 15 sind mit einem inkompressiblen Übertragungsmedium, beispielsweise einem Öl, gefüllt. Auf diese Weise wird ein Messdruck p_{M}, der auf den Druckmittler 3 wirkt, über die Messleitung 13 zu dem einen Anschluss der Differenzdruckmesszelle 5 weitergeleitet. An dem anderen Anschluss der Differenzdruckmesszelle 5 ist die Kompensationsleitung angeschlossen, die ebenfalls mit dem Übertragungsmedium gefüllt ist.

Die Messleitung 13 und die Kompensationsleitung 15 sind im vorliegenden Ausführungsbeispiel beide in einer gemeinsamen Ummantelung 17, die als mechanischer Schutz für beide Leitungen 13, 15 wirkt, angeordnet. Durch die Ummantelung 17 wird sichergestellt, dass eine Störtemperatur T_{STÖR}, die im Bereich der Leitungen 13, 15 auf den Drucksensor 1 einwirkt, gleichermaßen auf die Messleitung 13 und die Kompensationsleitung 15 wirkt. Eine temperaturinduzierte Volumenänderung des Übertragungsmediums in der Messleitung 13 und der Kompensationsleitung 15 wird damit gleichermaßen in beiden Leitungen hervorgerufen.

Ferner ist das druckinsensitive Element 4 den Druckmittler 3 ringförmig umgebend in den Prozessanschluss 9 integriert. Der Druckmittler 3 und das druckinsensitive Element 4 weisen im vorliegenden Ausführungsbeispiel zur Prozessumgebung hin orientierte Flächen gleicher Größe auf, sodass eine Einwirkung der Prozesstemperatur Tp auf den Druckmittler 3 und das druckinsensitive Element 4 ebenfalls gleichermaßen erfolgt. Lediglich der Prozessdruck P_{M} wirkt ausschließlich auf den Druckmittler 3. Durch die vorliegende Ausgestaltung wird erreicht, dass temperaturinduzierte Messfehler aufgrund einer Volumenänderung des Übertragungsmediums, die durch die Prozesstemperatur Tp oder die Störtemperatur T_{STÖR} hervorgerufen werden, sowohl in der Messleitung 13 als auch in der Kompensationsleitung 15 gleichermaßen auftreten. Dies wird insbesondere noch dadurch unterstützt, dass in der Messleitung 13 und in der Kompensationsleitung 15 das gleiche Volumen des Übertragungsmediums eingefüllt ist und die Messleitung 13 und die Kompensationsleitung 15 parallel zueinander in der Ummantelung 17 geführt sind.

Dadurch, dass der Differenzdruckmesszelle 5 an ihrem einen Anschluss die Messleitung 13 und an ihrem anderen Anschluss die Kompensationsleitung 15 zugeführt ist, wird eine rein mechanische Kompensation von temperaturinduzierten Messfehlern erreicht. In der Messleitung 13 wirkt nämlich der Messdruck P_{M} sowie ein durch die Prozesstemperatur Tp sowie die Störtemperatur T_{STÖR} induzierter Druck P_{T}. In der Kompensationsleitung 15 wirkt nur der temperaturinduzierte Druck P_{T}, da das druckinsensitive Element 4 eine Wirkung des Messdrucks P_{M} verhindert.

Aufgrund der Eigenschaften einer Differenzdruckmesszelle wird von der Differenzdruckmesszelle 5 lediglich der Messdruck P_{M} detektiert und ist über eine geeignete Elektronik an dieser abgreifbar. Die vorliegende Ausgestaltung des Drucksensors 1 schließt nicht aus, dass zusätzliche elektronische Messfehlerkompensationseinrichtungen vorgesehen werden. Aufgrund der vorliegenden, sehr einfachen und direkten Kompensation temperaturinduzierter Messfehler können diese aber deutlich weniger komplex als im Stand der Technik ausfallen.

Da im vorliegenden Ausführungsbeispiel die Messleitung 13 und die Kompensationsleitung 15 in einer gemeinsamen Ummantelung 17 geführt sind und diese gemeinsame Ummantelung 17 gleichzeitig als mechanischer Schutz für die beiden Leitungen 13, 15 fungiert, werden außerdem mechanisch induzierte Messfehler deutlich verringert und wirken ferner aufgrund der gemeinsamen Führung in der Ummantelung 17 ebenfalls auf beide Leitungen 13, 15, sodass auch hier eine automatische Kompensation entsprechender Messfehler erfolgt.

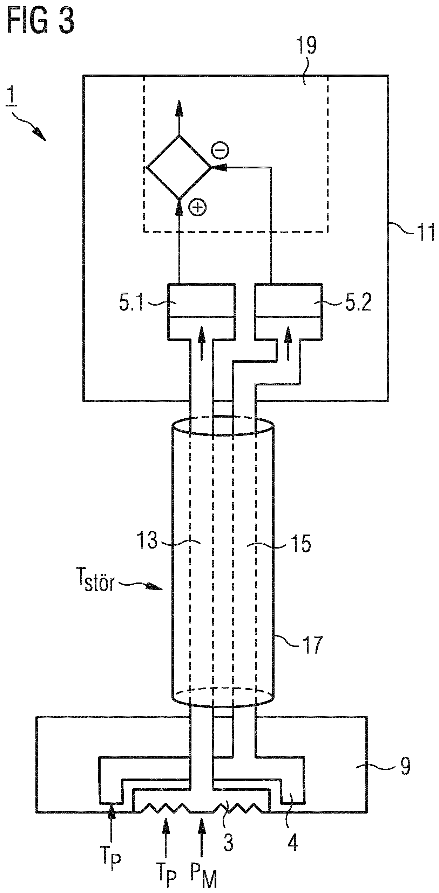

In der Figur 3 ist ein weiteres Ausführungsbeispiel eines Drucksensors 1 gemäß der vorliegenden Anmeldung gezeigt. Im Unterschied zu dem in Figur 2 dargestellten Ausführungsbeispiel weist das Ausführungsbeispiel gemäß Figur 3 keine Differenzdruckmesszelle, sondern zwei separate Messzellen 5.1 und 5.2 auf. Die erste dieser beiden Messzellen 5.1 ist uber die Messleitung 13 mit dem Druckmittler 3 und die zweite der Messzellen 5.2 über die Kompensationsleitung 15 mit dem druckinsensitiven Element 4 verbunden.

Gemäß dem vorliegenden Ausführungsbeispiel erfolgt dementsprechend eine Messfehlerkompensation nicht auf mechanische Art und Weise, sondern dadurch, dass in einer den Druckmesszellen 5.1, 5.2 nachgeordneten Messelektronik 19 durch Differenzbildung der Messfehler eliminiert wird. Dies kann sowohl analog als auch digital erfolgen.

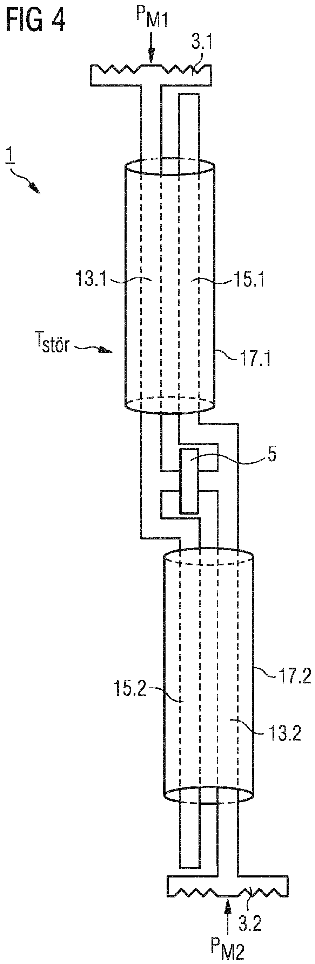

In Figur 4 ist in einem dritten Ausführungsbeispiel gezeigt, wie die vorliegende Erfindung auf Differenzdrucksensoren Anwendung finden kann.

Der in Figur 4 dargestellte Drucksensor 1 weist eine Differenzdruckmesszelle 5 auf, wobei im vorliegenden Ausführungsbeispiel zwei Druckmittler 3.1 und 3.2 vorgesehen sind. Der erste Druckmittler 3.1 ist dabei über eine erste Messleitung 13.1 mit einer Seite des Differenzdrucksensors 5 verbunden. Die dem ersten Druckmittler 3.1 zugeordnete Kompensationsleitung 15.1 ist, wie in Bezug auf das Ausführungsbeispiel in Figur 2 bereits erläutert, mit der anderen Seite des Differenzdrucksensors 5 verschaltet, sodass eine Kompensation von in Bezug auf den ersten Druckmittler 3.1 induzierten Messfehlern stattfindet. Um eine Differenzdruckmessung zu ermöglichen, ist der zweite Druckmittler 3.2 über eine zweite Messleitung 13.2 mit dem der ersten Messleitung 13.1 gegenüberliegenden Eingang der Differenzdruckmesszelle 5 verbunden. Dementsprechend werden die in Bezug auf den zweiten Druckmittler 3.2 induzierten Messfehler über eine zweite Kompensationsleitung 15.2 auf den anderen Eingang der Differenzdruckmesszelle 5, das heißt den gleichen Eingang, mit dem auch der erste Druckmittler 3.1 verbunden ist, eingekoppelt. Beide Druckmittler 3.1, 3.2 sind somit für sich fehlerkompensiert, sodass die Differenzdruckmesszelle 5 lediglich die Druckdifferenz zwischen den beiden Messdrücken P1 und P2 detektiert. Wie bezüglich der vorhergehenden Ausführungsbeispiele bereits beschrieben, sind die Mess- und Kompensationsleitungen 13.1, 15.1, 13.2, 15.2 jeweils in gemeinsamen Ummantelungen 17.1, 17.2 angeordnet, sodass ein gleichmäßiges Einwirken von Temperatur und mechanischen Einwirkungen gewährleistet ist.

### Bezugszeichenliste

- 1: Drucksensor
- 3: Druckmittler
- 4: Druckinsensitives Element
- 5: Druckmesszelle
- 7: Kapillare
- 9: Prozessanschluss

- 11: Gehäuse
- 13: Messleitung
- 15: Kompensationsleitung
- 17: Ummantelung
- 19: Messelektronik

- P_{M}: Messdruck
- Tp: Prozesstemperatur
- P_{T}: Temperaturinduzierter Druck

## Patentansprüche

1. Drucksensor (1) mit wenigstens einer Druckmesszelle (5), einem Druckmittler (3) sowie wenigstens einer Messleitung (13) zur Übertragung eines auf den Druckmittler (3) wirkenden Drucks zu der Druckmesszelle (5), wobei der Drucksensor (1) wenigstens eine Kompensationsleitung (15) aufweist, die parallel zu der Messleitung (13) angeordnet ist und gleiche thermische und mechanische Eigenschaften wie die Messleitung (13) aufweist, so dass eine auf die Messleitung (13) wirkende Temperatur und/oder eine auf die Messleitung (13) wirkende mechanische Wirkung gleichermaßen auf die Kompensationsleitung (15) wirkt,
**dadurch gekennzeichnet, dass**
die Kompensationsleitung (15) mit einem den Druckmittler (3) nachbildenden druckinsensitiven Element (4) verbunden ist, das den Prozessbedingungen in gleicher Weise wie der Druckmittler (3) ausgesetzt ist, wobei:
- die Kompensationsleitung (15) mit der Druckmesszelle (5) verbunden ist, wobei die Druckmesszelle (5) als Differenzdruckmesszelle mit zwei druckbeaufschlagbaren Seiten ausgebildet ist, die einerseits mit der Messleitung (13) und andererseits mit der Kompensationsleitung (15) verbunden ist, oder
- der Drucksensor (1) eine erste Druckmesszelle (5.1), mit der die Messleitung (13) verbunden ist, und an der ein Messwert abgreifbar ist, eine zweite Druckmesszelle (5.2), mit der der die Kompensationsleitung (15) verbunden ist, und an der ein Kompensationswert abgreifbar ist, sowie eine Messelektronik (19), der eingangsseitig der Messwert und der Kompensationswert zugeführt sind und an der ausgangsseitig ein kompensierter Messwert abgreifbar ist, aufweist.

2. Drucksensor (1) gemäß Anspruch 1,
**dadurch gekennzeichnet, dass**
das druckinsensitive Element (4) gemeinsam mit dem Druckmittler (3) in einen Prozessanschluss (9) integriert ist.

3. Drucksensor (1) gemäß Anspruch 2,
**dadurch gekennzeichne**t, dass
das druckinsensitive Element (4) den Druckmittler (3) ringförmig umgebend ausgebildet ist.

4. Drucksensor (1) gemäß Anspruch 3,
**dadurch gekennzeichnet, dass**
das druckinsensitive Element (4) eine zum Prozess weisende Fläche einer Größe aufweist, die einer Größe einer zum Prozess weisenden Fläche des Druckmittlers (3) entspricht, vorzugsweise mit ihr gleich ist.

5. Drucksensor (1) gemäß einem der vorhergehenden Ansprüche, **dadurch gekennzeichnet, dass**
die Messleitung (13) und Kompensationsleitung (15) in einer gemeinsamen als mechanischer Schutz ausgebildeten Ummantelung (17) angeordnet sind.

6. Drucksensor (1) gemäß einem der vorhergehenden Ansprüche, **dadurch gekennzeichnet,** wenn die Kompensationsleitung (15) mit der Druckmesszelle (5) verbunden ist, wobei die Druckmesszelle (5) als Differenzdruckmesszelle mit zwei druckbeaufschlagbaren Seiten ausgebildet ist, die einerseits mit der Messleitung (13) und andererseits mit der Kompensationsleitung (15) verbunden ist, der Drucksensor (1) einen ersten und einen zweiten Druckmittler (3.1, 3.2) und zwei Kompensationsleitungen (15.1, 15.2) aufweist, wobei die Differenzdruckmesszelle einerseits mit der Messleitung (13.1) des ersten Druckmittlers (3.1) und der dem zweiten Druckmittler (3.2) zugeordneten Kompensationsleitung (15.2) und andererseits mit der Messleitung (13.2) des zweiten Druckmittlers (3.2) und der dem ersten Druckmittler (3.1) zugeordneten Kompensationsleitung (15.1) verbunden ist.

## Claims

1. Pressure sensor (1) with at least one pressure measuring cell (5), a pressure means (3) as well as at least one measurement line (13) for transferring a pressure applied upon the pressure means (3) to the pressure measuring cell (5), wherein the pressure sensor (1) comprises at least one compensation line (15), arranged parallel in relation to the measurement line (13) and has the same thermal and mechanical features as the measurement line (13), so that a temperature acting on the measurement line (13) and/or a mechanical effect acting on the measurement line (13) equally acts on the compensation line (15), **characterised in that** the compensation line (15) is connected to a pressure-insensitive element (4) that is formed like the pressure means (3), which is subjected to the process conditions in the same fashion as the pressure means (3), wherein:
- the compensation line (15) is connected to the pressure measuring cell (5), the pressure measuring cell (5) being embodied as a pressure difference measuring cell with two sides that can be impinged on with pressure, which cell is connected at the one side to the measurement line (13) and at the other side to the compensation line (15), or
- the pressure sensor (1) comprises a first pressure measuring cell (5.1), to which the measurement line (13) is connected and renders available a measurement value, a second pressure measuring cell (5.2), to which the compensation line (15) is connected and renders available a compensation value as well as an electronic measuring system (19), with the measurement value and the compensation value being fed to the input thereof and a compensated measurement value being provided at its output side.

2. Pressure sensor (1) in accordance with claim 1, **characterised in that** the pressure-insensitive element (4) is integrated in a process connection (9) jointly with the pressure means (3).

3. Pressure sensor (1) in accordance with claim 2, **characterised in that** the pressure-insensitive element (4) is embodied surrounding the pressure means (3) in an annular fashion.

4. Pressure sensor (1) in accordance with claim 3, **characterised in that** the pressure-insensitive element (4) shows an area facing the process with a size, which is approximately equivalent to a size of an area of the pressure means (3) facing the process, preferably is identical thereto.

5. Pressure sensor (1) in accordance with any one of the preceding claims, **characterized in that** the measurement line (13) and compensation line (15) are arranged in a common cover (17), embodied as a mechanical protection means.

6. Pressure sensor (1) in accordance with any one of the preceding claims, **characterised in that**, if the compensation line (15) is connected to the pressure measuring cell (5), wherein the pressure measuring cell (5) is formed as a pressure difference measuring cell with two sides that can be impinged on with pressure, which cell is connected at one side to the measurement line (13) and at the other side to the compensation line (15), the pressure sensor (1) comprises a first and a second pressure means (3.1, 3.2) and two compensation lines (15.1, 15.2), wherein the pressure difference measuring cell at one side is connected to the measurement line (13.1) of the first pressure means (3.1) and the compensation line (15.2) allocated to the second pressure means (3.2) allocated) and at the other side to the measurement line (13.2) of the second pressure means (3.2) and the compensation line (15.1) allocated to the first pressure means (3.1).

## Revendications

1. Capteur de pression (1) comprenant au moins une cellule de mesure de pression (5), un transmetteur de pression (3) ainsi qu'au moins une conduite de mesure (13) permettant de transmettre la pression agissant sur le transmetteur de pression (3) à la cellule de mesure de pression (5), le capteur de pression (1) comprenant au moins une conduite de compensation (15) qui est montée parallèlement à la conduite de mesure (13) et présente les mêmes propriétés thermiques et mécaniques que la conduite de mesure (13), de sorte que la température agissant sur la conduite de mesure (13) et/ou l'effet mécanique agissant sur la conduite de mesure (13) agisse(nt) de manière similaire sur la conduite de compensation (15),
**caractérisé en ce que**
- la conduite de compensation (15) est reliée à un élément insensible à la pression (4) reproduisant le transmetteur de pression (3) qui est exposé aux conditions de process de la même façon que ce transmetteur de pression (3),
- la conduite de compensation (15) est reliée à la cellule de mesure de pression (5), la cellule de mesure de pression (5) étant réalisée sous la forme d'une cellule de mesure de pression différentielle ayant deux faces pouvant être exposées à la pression, qui est reliée d'une part, à la conduite de mesure (13) et d'autre part, à la conduite de compensation (15), ou
- le capteur de pression (1) comporte une première cellule de mesure de pression (5.1) avec laquelle la conduite de mesure (13) est reliée, et sur laquelle peut être prélevée une valeur de mesure, une seconde cellule de mesure de pression (5.2) avec laquelle la conduite de compensation (15) est reliée, et sur laquelle peut être prélevée une valeur de compensation, ainsi qu'une électronique de mesure (19) à laquelle, côté entrée, sont transférées la valeur de mesure et la valeur de compensation et sur laquelle côté sortie peut être prélevée une valeur de mesure compensée.

2. Capteur de pression (1) conforme à la revendication 1,
**caractérisé en ce que**
l'élément insensible à la pression (4) est intégré avec le transmetteur de pression (3) dans un raccord de procédé (9).

3. Capteur de pression (1) conforme à la revendication 2,
**caractérisé en ce que**
l'élément insensible à la pression (4) entoure annulairement le transmetteur de pression (3).

4. Capteur de pression (1) conforme à la revendication 3,
**caractérisé en ce que**
l'élément insensible à la pression (4) comporte une surface tournée vers le process ayant une dimension qui correspond à la dimension de la surface du transmetteur de pression (3) tournée vers le process et est de préférence égale à celle-ci.

5. Capteur de pression (1) conforme à l'une des revendications précédentes,
**caractérisé en ce que**
la conduite de mesure (13) et la conduite de compensation (15) sont montées dans une enveloppe commune (17) réalisée sous la forme d'une protection mécanique.

6. Capteur de pression (1) conforme à l'une des revendications précédentes,
**caractérisé en ce que**
lorsque la conduite de compensation (15) est reliée à la cellule de mesure de pression (5), la cellule de mesure de pression (5) étant réalisée sous la forme d'une cellule de mesure de pression différentielle comprenant deux faces pouvant être exposés à la pression, reliées d'une part à la conduite de mesure (13) et d'autre part, à la conduite de compensation (15),
le capteur de pression (1) comporte un premier transmetteur de pression et un second transmetteur de pression (3.1, 3.2) et deux conduites de compensation (15.1, 15.2), la cellule de mesure de pression différentielle étant reliée d'une part avec la conduite de mesure (13.1) du premier transmetteur de pression (3.1) et la conduite de compensation (15.2) associée au second transmetteur de pression (3.2) et d'autre part, avec la conduite de mesure (13.2) du second transmetteur de pression (3.2) et la conduite de compensation (15.1) associée au premier transmetteur de pression (3.1).
